# EUROPEAN PATENT APPLICATION

(11) **EP 2 225 955 A1**
(43) Date of publication of application: **08.09.2010**
(21) Application number: 08845261.0
(22) Date of filing: 27.10.2008
(51) Int. Cl.: A23J 3/16, A23L 1/30

(54) **ENRICHED LIQUID FOOD COMPRISING SOYBEAN PROTEIN MATERIAL**

(30) Priority: 30.10.2007 JP 2007282214
(71) Applicant: Fuji Oil Company, Limited, Chuo-ku Osaka-shi Osaka 542-0086 (JP)
(72) Inventor: KATO, Hiroyuki, Izumisano-shi Osaka 598-8540 (JP); ASHIDA, Shigeru, Tsukubamirai-shi Ibaraki 300-2436 (JP)
(74) Representative: Hayes, Adrian Chetwynd
(86) International application number: PCT/JP2008/069453
(87) International publication number: WO 2009/057554

(57) **Abstract**

The object is to provide an enriched liquid food which comprises a soybean protein material, which has a low viscosity, which produces little aggregates, and which has good physical properties. An enriched liquid food can be prepared by using a soybean protein material having the following physical properties a) to d): a)an aqueous solution containing the soybean protein material in an amount of 5 g in terms of solid content relative to 100 g of the aqueous solution and also containing calcium lactate in an amount of 30 mg in terms of calcium content has a viscosity of 10 mPa·s or less at 20°C after the aqueous solution is heated at 121°C for 10 minutes, and produces precipitates in an amount of 1 vol% or less after the aqueous solution is centrifuged at 1,300 × g for 5 minutes; b) a 12-wt% aqueous solution of the soybean protein material has a viscosity of 1,000 mPa·s or less at 5°C; c) the soybean protein material can be solubilized in a 0.22 M TCA at a solubilization ratio of less than 11%; and d) the soybean protein material has a PSI (protein solubility index) value of 70 or more. The soybean protein material can be produced by heating an aqueous solution or an aqueous dispersion solution of a soybean protein raw material at pH 5.7 to 7.4 and at a temperature of 110 to 160°C for 15 to 70 seconds.

## Description

### Technical Field

The present invention relates to an enriched liquid food (diet) using a soybean protein material.

### Background Art

Due to aging society of recent years, a market for a so-called enriched liquid food to be taken in by an elderly person has been expanded. Since the liquid food has to contain all of nutrients required for a human being to live, a protein resource has an important role among the nutrients. As the protein resource, casein has predominantly used as a milk protein that is less subject to influences by minerals and the like to be mixed and has high stability against a high-temperature sterilization treatment such as a retort treatment.

Because of an increase in consciousness of general consumers about health, interest in nutrient components and physiological effects of soybean protein is recently being increased. Many foods and beverages that enable consumers to ingest a soybean protein material effectively have been developed in the aim of not only supplementation of protein but also cholesterol lowering action and fat burning action. From the same reasons, there is an increase in users who wish to use a soybean protein material as an enriched liquid food. However, since soybean protein materials have poor resistance against a high mineral environment and retort heating, a conventional soybean protein material when used for preparing a liquid food increases viscosity, generates many aggregates, and causes clogging or the like inside a tube in administration to the stomach directly. Therefore, the conventional soybean protein material has not been used widely yet, and there is a demand for a soybean protein material that maintains a low viscosity and does not cause aggregation when used for liquid foods.

Although a liquid food in a liquid state using a plant protein degradation product is recited in claims of Patent Document 1, a use amount of the plant protein relative to total protein is small. To begin with, Patent Document 1 discloses no example using plant protein. It is assumed that the generation of aggregates and the increase in viscosity are caused even when a protein soybean material prepared by enzyme degradation is used for the enriched liquid food.

Patent Document 2 discloses that generation of aggregates and precipitation of a soybean protein material can be suppressed by using phosphoric acid, organic acid, or a salt thereof even when a divalent metal such as a calcium or magnesium ion is added to slurry or a solution of the soybean protein material. However, the soybean protein material is not considered to be used widely for enriched liquid foods wherein various nutrient components are designed because it is essential to add phosphoric acid or the like in an amount equal to or more than a weight of the divalent metal. Further, it is undesirable to add a large amount of such acids when designing nutrient components of an enriched liquid food because a chemical-like flavor of phosphoric acid can be imparted, or a chelate effect of phosphoric acid and citric acid can cause mineral absorption inhibition in the small intestine when the acids are taken in. An enriched liquid food having low viscosity and less aggregation and containing a large amount of soybean protein has not been obtained yet without requiring the addition of other substances such as a chelate agent.

Patent Document 1: JP 10-210951 A
Patent Document 2: JP 2000-83595 A

### Disclosure of Invention

### Problems to be Solved by the Invention

An object of the present invention is to obtain an enriched liquid food comprising a soybean protein material and having good physical properties such as a low viscosity and a small amount of aggregates.

### Means for Solving the Problems

The present inventors specified physical properties of a soybean protein material necessary for preparing an enriched liquid food and found a process for preparing a soybean protein material conforming to the physical properties to succeed in obtaining an enriched liquid food containing a large amount of the soybean protein material and having good physical properties. Thus, the present invention has been completed.

That is, the present invention provides:
(1) An enriched liquid food obtained by using a soybean protein material having the following physical properties a) to d):
   a) an aqueous solution containing the soybean protein material in an amount of 5 g in terms of solid content relative to 100 g of the aqueous solution and also containing calcium lactate in an amount of 30 mg in terms of calcium content has a viscosity of 10 mPa·s or less at 20°C after the aqueous solution is heated at 121°C for 10 minutes, and produces precipitates in an amount of 1 vol% or less after the aqueous solution is centrifuged at 1,300 × g for 5 minutes;
   b) a 12 wt% aqueous solution of the soybean protein material has a viscosity of 1,000 mPa·s or less at 5°C;
   c) the soybean protein material can be solubilized in a 0.22 M TCA at a solubilization ratio of less than 11%; and
   d) the soybean protein material has a PSI (protein solubility index) value of 70 or more;
(2) The enriched liquid food according to the above (1), wherein the soybean protein material is prepared by heating an aqueous solution or an aqueous dispersion of a soybean protein raw material at pH 5.7 to 7.4 and at a temperature of 110 to 160°C for 15 to 70 seconds;
(3) The enriched liquid food according to the above (2), wherein the soybean protein material is prepared by heating an aqueous solution or an aqueous dispersion of a soybean protein raw material in the presence of a sulfite in an amount of 0.05 wt% or more relative to solid content; and
(4) The enriched liquid food according to the above (1), wherein the soybean protein material is contained in an amount of 50 wt% or more in terms of protein relative to total protein.

### Effect of the Invention

According to the present invention, an enriched liquid food can be prepared by using a soybean protein material and having good physical properties such as low viscosity and less aggregation.

### Best Mode for Carrying Out the Invention

### (Soybean Protein Material)

The soybean protein material in the present invention is a soybean protein material having all of the following physical properties, and only the soybean protein material conforming to the physical properties enables us to prepare a good enriched liquid food. That is,
a) an aqueous solution containing the soybean protein material in an amount of 5 g in terms of solid content relative to 100 g of the aqueous solution and also containing calcium lactate in an amount of 30 mg in terms of calcium content has a viscosity of 10 mPa·s or less at 20°C after the aqueous solution is heated at 121°C for 10 minutes, and produces precipitates in an amount of 1 vol% or less after the aqueous solution is centrifuged at 1,300 × g for 5 minutes;
b) a 12 wt% aqueous solution of the soybean protein material has a viscosity of 1,000 mPa·s or less at 5°C;
c) the soybean protein material can be solubilized in a 0.22 M TCA at a solubilization ratio of less than 11%; and
d) the soybean protein material has a PSI (protein solubility index) value of 70 or more.
   Further, more appropriately and preferably, for preparing the good enriched liquid food, the viscosity described in b) is 600 mPa·s or less, the 0.22 M TCA solubility described in c) is less than 10%, and the PSI described in d) is 73 or more, respectively. Even when an enriched liquid food is prepared by using a soybean protein material that does not conform to the conditions of a) to d), the thus-prepared enriched liquid food has an excessively high viscosity or contains aggregates and hardly obtains the good physical properties as a liquid food.

### (Process for Preparing Soybean Protein Material)

Hereinafter, a process for preparing the soybean protein material of the present invention will be described. Examples of a soybean protein raw material in the present invention includes whole soymilk and a defatted soymilk obtained by extracting a protein component from whole soybeans, defatted soybeans, and the like with water or hot water and removing "okara (soy pulp)" component. Further examples thereof include soybean protein isolate obtained from such soymilk by concentrating the protein by a treatment using a UF membrane or isoelectric precipitation using an acid or the like. Furthermore, it is possible to use a soybean protein raw material obtained by neutralizing or sterilizing such soymilk or soybean protein isolate, followed by drying.

The soybean protein material in the present invention can be obtained, for example, by adjusting pH of an aqueous suspension or an aqueous solution of the above-described soybean protein raw material to 5.7 to 7.4, preferably 6.0 to 7.0, and subjecting the aqueous suspension or aqueous solution to a heat treatment in an aqueous system at 110°C to 160°C, preferably 115°C to 140°C, for 15 to 70 seconds, preferably 20 to 60 seconds. When pH during the heating is low, viscosity of a solution after heat sterilization is increased to make it difficult to carry out a subsequent step such as spray drying. On the other hand, when pH during the heating is high, not only viscosity during the preparation of a liquid food is increased, but also an increase in viscosity during its storage is accelerated.

The viscosity during the preparation of a liquid food is increased when the heating temperature is insufficient, while solubility of the soybean protein is reduced to allow aggregate generation when the heating temperature is too high. On the other hand, viscosity of a soybean protein solution to be obtained is increased when the heating time is too short, resulting in increase in the size of an oil droplet diameter of an oil-in-water emulsion using the soybean protein. When the heating time is too long, the solubility of the soybean protein is reduced to allow aggregate generation. Although it is possible to arbitrarily set a concentration of the soybean protein raw material in the aqueous suspension or the aqueous solution during the heating, one example of the concentration is generally 5 to 20 wt% in terms of solid content. A concentration lower than the exemplified range is not particularly troublesome from practical point of view though an extra treatment cost may be incurred, while a concentration higher than the exemplified range is acceptable insofar as resulting viscosity does not influence on subsequent treatments. It is possible to use a high temperature short time heat sterilization apparatus such as a steam injection type continuous direct heat sterilization apparatus or the like for industrial purposes.

### (Sulfite)

The present invention enables us to obtain a soybean protein composition having lower viscosity and less aggregation by using a sulfite in combination. Sodium sulfite can preferably be used as the sulfite, and those used for general food industry are usable as sodium sulfite. Also, sodium hyposulfite is likewise usable. The sulfite can be added during an arbitrarily selected step before the heating in such a manner that 0.05 wt% or more of the sulfite relative to solid content is present during the heat treatment of the aqueous suspension or aqueous solution of the soybean protein raw material. The addition of the sulfite in an amount of 0.05 wt% or more makes it possible to effectively suppress the viscosity increase and the aggregate generation in the soybean protein material solution in the presence of a divalent metal, thereby imparting strong divalent metal resistance. When the addition amount is too large, an amount of residual sulfur dioxide in the soybean protein material produced is increased. Since the residual sulfur dioxide amount is limited by the Food Sanitation Act, the sulfite is usually used in an amount of 0.2 wt% or less relative to solid content so as not to exceed the value. Further, when the sulfite is added after the heat sterilization, it is difficult to expect the mineral resistance improvement effect of the sulfite.

The soybean protein material obtained as described above has physical properties very suitable for use as a raw material for an enriched liquid food. Although it is possible to use the soybean protein material in a liquid state as it is for preparing a liquid food, it is preferable to prepare a liquid food by forming a powder of the soybean protein material by drying, followed by mixing the powder with various raw materials.

A hydrolysis reaction is generally utilized for reducing viscosity of a soybean protein solution but, at the same time, mineral resistance is generally reduced when the hydrolysis is carried out to allow TCA (0.22M) solubility of the soybean protein material to reach 11% or more, thereby easily causing viscosity increase or aggregation generation in a liquid food. When preparing an enriched liquid food, it is not preferable to positively carry out a hydrolysis reaction that causes a TCA solubility of 11% or more.

### (Enriched Liquid food)

In the present invention, the enriched liquid food means a food that has a caloric value of 1 kcal/mL or more, contains at least protein, lipid, carbohydrates, minerals, and vitamins and is in the form of a solution at ordinary temperature. Preferably, the enriched liquid food has an energy composition of 10% to 25% of protein, 15% to 45% of lipid, and 35% or more of carbohydrates as well as a composition of 20 to 110 mg/100kcal of calcium and 10 to 70 mg/100kcal of magnesium. More preferably, the enriched liquid food has an energy composition of 16% to 20% of protein, 20% to 30% of lipid, and 50% to 65% of carbohydrates as well as a composition of 35 to 65 mg/100kcal of calcium and 15 to 40 mg/100kcal of magnesium. Preferred viscosity for the liquid food can be, for example, 150 mPa·s or less. Further, the enriched liquid food containing the soybean protein material in an amount of 50 wt% or more, preferably 60 wt% or more, in terms of protein relative to total protein is preferable because the enriched liquid food enables consumers to readily enjoy the physiological effects derived from the soybean protein. Further, the enriched food preferably has low osmotic pressure that suppresses side reactions such as diarrhea to a minimal, fluidity that enables consumers to pass through a narrow tube, a good flavor, and emulsion stability capable of storage at ordinary temperature for several months.

It is possible to impart properties such as a high calorie content, a high protein content, well-balanced nutrients, and a good flavor to the enriched liquid food by appropriately adding a salt such as a phosphoric salt, a citric salt, etc., a flavoring agent, and the like. In this respect, it is possible to largely reduce a phosphoric salt or a citric salt functioning as a chelate agent by using the soybean protein material of the present invention as compared to a conventional soybean protein material. That is, a conventional soybean protein material causes the generation of aggregation or precipitation or an increase in viscosity during storage of a liquid food unless a large amount of a chelate agent is used. However, it is possible to avoid these problems by using the soybean protein material of the present invention. In many cases, a chelate agent is added in an amount of 5 to 20 wt% relative to a liquid food, but it is possible to use a chelate agent in an amount of 0 to 5 wt% when the soybean protein material of the present invention is used.

In order to prepare the enriched liquid food, the raw materials are mixed in an aqueous system, and an oil component contained therein is homogenized. "Homogenization" means that a mixture containing water and oil is formed into an emulsion, followed by finely-dividing droplets of the emulsion. As one of methods of homogenization, it is known that an apparatus such as an emulsifier is used. Examples of the emulsifier include a stirring machine having a rotary blade, a colloid mill having a disk or a rotor capable of high speed revolution and a fixed disk, an ultrasonic emulsifier, a homogenizer which is a kind of high-pressure pumps, and the like. Among them, a homogenizer is preferred, and examples of the homogenizing step include a treatment at 40 to 100 MPa, preferably 50 to 90 MPa, and the like.

It is possible to distribute the enriched liquid food of the present invention together with a container containing the above-described nutrient composition. The enriched liquid food has the advantages of easy storage and transportation and being usable at anytime when needed because the nutrient composition can be heat-sterilized and aseptically filled the container with the composition. The enriched food also has such advantages that protein aggregation and precipitation are hardly formed during storage. As the filling method, it is possible to employ a method of aseptically filling a container with the liquid food after subjecting the liquid food to heat sterilization (for example, a method of using UHT sterilization and aseptic filling in combination), a method of heat-sterilizing the liquid food together with a container after filling the container with the liquid food (for example, a retort sterilization), and the like. In the UHT sterilization method, any one of an indirect heating method and a direct heating method can be employed. Further, in the case where the liquid food that has been prepared and distributed in the form of a dried powder without sterilizing it in the form of an aqueous solution so that it is reconstituted into an aqueous solution immediately before use, it is possible to obtain the enriched liquid food having the preferred physical properties such as low viscosity and less aggregation by the use of the soybean protein material of the present invention.

### (Measurement Method)

Hereinafter, measurement methods employed in the present invention will be described.

### <PSI>

A soybean protein material sample of 1 g was weighed, and adding 100 mL of ion exchange water thereto, and the mixture was stirred with a propeller stirrer for 10 minutes (500 rpm). A filtrate was obtained by filtering the mixture through a No. 5A filter paper. Nitrogen in the filtrate relative to total nitrogen in the sample was expressed in percentage (measured by Kjeldahl method).

### <0.22M TCA solubility>

To 2 wt% aqueous solution of a soy bean protein material sample was added an equal amount of 0.44 M trichloroacetic acid (TCA) and the percentage of soluble protein was measured by Kjeldahl method. As the degradation of protein proceeds, TCA solubility increases.

### <12 wt% Aqueous solution viscosity>

Viscosity at 5°C of a 12 wt% aqueous solution of a soybean protein material sample was measured with a B type viscometer (manufactured by TOKIMIC INC.).

### <Amount of residual sulfur dioxide>

The amount of residual sulfur dioxide was measured in accordance with "Sulfur Dioxide (Test Method B)" of Food Additive Analysis Method 2000, Second Edition.

### <Mineral-added solution viscosity and amount of precipitate>

Calcium lactate was added to 100 g of a 5 wt% aqueous solution of a soybean protein material sample so as to achieve a calcium amount of 30 mg, and the solution was filled into a retort pouch. Viscosity of the solution at 20°C after heating at 121°C for 10 minutes by a retort sterilization apparatus (manufactured by Hisaka Works, Ltd.) was measured with a B type viscometer (manufactured by TOKIMEC INC.). Further, 10 mL of the solution was poured into a 10 mL graduated conical centrifugal precipitation tube (manufactured by Tech-Jam) to centrifuge at 1,300 × g for 10 minutes, and the amount of a precipitate was measured.

### <Emulsified particle diameter>

To 100 g of a 5 wt% aqueous solution of a soybean protein material sample was added 1.5 g of soybean oil (manufactured by Fuji Oil Company Limited), and the mixture was mixed and subjected to an ultrasonic treatment with an ultrasonic wave generation apparatus (manufactured by Kaijo Corporation). An oil droplet diameter of the oil-in-water emulsion obtained was measured with a laser diffraction particle size distribution measurement apparatus (SALD-2200, manufactured by SHIMADZU CORPORATION) to measure the particle diameter.

### <Viscosity of liquid food>

Viscosity at 25°C of a solution of a liquid food prepared was measured with a B type viscometer (manufactured by TOKIMEC INC.).

### <Particle diameter of aggregate in liquid food>

A liquid food prepared was observed with a microscope at a magnification of × 200, and a particle diameter was confirmed by the visual observation.

### <Amount of precipitate in liquid food after centrifugation>

Into a 300 mL centrifugation tube was poured 50 g of each of liquid foods prepared, followed by centrifugation with a centrifuging apparatus (Type H-9R; manufactured by KOKUSAN Co., Ltd.) at 10,000 × g for 5 minutes. The supernatant was discarded. The weight of the precipitate was measured.

### Examples

Hereinafter, embodiments of the present invention will be specifically illustrated by examples. However, the technical scope of the present invention is not limited to the examples.

### (Example 1) Comparison of pH during heating (Soybean protein materials A to D)

To 1,000 parts by weight of water was added 100 parts by weight of slightly denatured defatted soybeans, and extraction was carried out with stirring by a homomixer (manufactured by Tokushukika Kogyo Co., Ltd.) at 40°C for 30 minutes, followed by eliminating "okara" by centrifugation at 3,000 × g to obtain defatted soymilk. The defatted soymilk was adjusted to pH 4.5 with hydrochloric acid, followed by isoelectric precipitation, and centrifugation to obtain acid-precipitated curd. To this was added 4-fold amount of water, and the mixture was adjusted to a predetermined pH of from 6.0 to 7.4 with sodium hydroxide to obtain a solution containing soybean protein isolate. To the soybean isolate was added sodium sulfite in an amount of 0.08% relative to the solid content thereof, and the mixture was heated by using a vacu-therm instant sterilizer (continuous direct heating type sterilization apparatus; hereinafter referred to as VTIS) (manufactured by Alfa Laval Japan) at 150°C for 40 seconds, followed by spray drying with a spray drier (manufactured by Ohkawara Kakohki Co., Ltd.) to obtain a soybean protein material in the form of a powder (each of A to D).

### (Example 2) Sodium sulfite-free Soybean protein material E

Soybean protein material E was obtained according to the same manner as that in Example 1 except for adjusting the pH before the heating to 6.3 without addition of sodium sulfite.

### (Comparative Example 1) Comparison of pH during heating (Soybean protein materials F and G)

Soybean protein materials F and G were obtained according to the same manner as that in Example 1 except for adjusting the pH before the heating to 5.5 (F) and 7.6 (G).

### (Comparative Example 2) Low temperature short time heating (Soybean protein material H)

Soybean protein material H was obtained according to the same manner as that in Example 1 except for adjusting the pH before the heating to 7.0 and heating at 140°C for 10 seconds.

### (Comparative Example 3) Protease hydrolysis (Soybean protein materials I and J)

Soybean protein materials I and J were obtained according to the same manner as that in Example 1 except for adjusting the pH before the heating to 6.3 (I) and 7.0 (J) and, after addition of sodium sulfite, adding 0.1 wt% of alkali protease (PROTIN A manufactured by Amano Enzyme Inc.) relative to solid content, and hydrolyzing at 50°C for 15 minutes, followed by heating.

### (Comparative Example 4) Chelate Agent + Protease hydrolysis (Soybean protein material K)

Soybean protein material K was obtained according to the same manner as that in Comparative Example 3 except for adding 3% of hexametaphosphoric acid (manufactured by Kishida Chemical Co., Ltd.) relative to solid content, adjusting the pH to 7.0, and hydrolyzing, followed by heating.

Evaluations of Examples 1 and 2 (soybean protein materials A to E) and Comparative Examples 1 to 4 (Soybean protein materials F to K) are summarized in Table 1. In the pH range of Example 1 (Soybean protein materials A to E), each of the water solubilities (PSI) is as high as 95% or more, each of the 12% solution viscosity is 500 mPa·s or less, a viscosity of each of mineral-added solutions is 10 mPa·s or less, and each of the amounts of precipitate after centrifugation of the mineral-added solutions is also as low as less than 0.1 vol%. These data show that these soybean protein materials have high water solubility, low viscosity, and low reactivity with minerals. Although Example 2 which is the sodium sulfite-free material has high solubility, its viscosity is somewhat higher.
Although sodium sulfite is added to those other than Example 2, the amount of sulfur dioxide in each of the protein materials after spray drying is less than 30 ppm which is the critical value of the Food Sanitation Act.

Since the pH during the heating of the soybean protein material F of Comparative Example 1 is lower, PSI is lowered, and the amount of the precipitate after centrifugation of the mineral-added solution is as high as 2 vol%. Further, the emulsified particle diameter thereof becomes large. In Soybean protein material G of Comparative Example 1 whose pH during heating is high and Comparative Example 2 (Soybean protein material H) whose heating temperature is low, although the solubility such as PSI is high, the 12 wt% solution viscosity thereof is higher as compared to those of Examples. As to Comparative Examples 3 and 4 in which the enzyme degradation has been carried out, Comparative Example 3 (Soybean protein material I) in which PSI is lowered due to the low pH during the heating and the enzyme degradation has the lowered solubility despite the low viscosity, resulting in the large amount of a precipitate and the large emulsified particle diameter. Soybean protein material J of Comparative Example 3 having high PSI has high mineral-added solution viscosity and the large amount of a precipitate after centrifugation. In Comparative Example 4 (Soybean protein material K) to which the chelate agent sodium hexametaphosphate has been added, 12 wt% solution viscosity is increased though the amount of a precipitate after centrifugation of the mineral-added solution is reduced. Examples 1 and 2, Comparative Example 1 (G), Comparative Example 3 (J), and Comparative Example 4 are reduced in emulsified particle diameter due to the high heat history of the heating conditions and high NSI.

(Example 3) Preparation of enriched liquid food A liquid food was prepared by using each of Examples 1 and 2 (Soybean protein materials A to E), Comparative Examples 1 to 4 (Soybean protein materials F to K), and casein sodium (ALANATE180; manufactured by Fonterra Japan, Ltd.) (Comparative Example 5) as a protein material. More specifically, to 75.38 parts by weight of 60°C water were added 0.02 part by weight of monoglyceride succinate (POEM B-10; manufactured by Riken Vitamin Co., Ltd.), 15 parts by weight of dextrin (TK-16; manufactured by Matsutani Chemical Industry, Co., Ltd.), 2.5 parts by weight of rapeseed oil (manufactured by Fuji Oil Company Limited), and 5.5 parts by weight of the protein material, and the mixture was stirred with a TK homomixer (manufactured Tokushukika Kogyo Co., Ltd.) at 5,000 rpm for 15 minutes. To the resultant mixture were added 0.8 part by weight of trisodium citrate, 0.4 part by weight of potassium chloride, 0.2 part by weight of magnesium chloride, and 0.2 part by weight of calcium chloride and the mixture was heated to 70°C, and further stirred with the homomixer for 10 minutes. The mixture was adjusted to pH 7.0 with sodium hydroxide, followed by a treatment at 20 MPa using a high pressure homogenizer (manufactured by APV Japan, Inc.), filling into a retort pouch. Then, and retort sterilization (manufactured by Hisaka Works, Ltd.) at 121°C for 20 minutes.

Evaluations of the liquid foods are summarized in the table. The liquid foods using Examples 1 and 2 (Soybean protein material A to E) and Comparative Example 5 (casein sodium) maintain low viscosity of less than 100 mPa·s immediately after the preparation and after storage, and the amount and the size of aggregates are favorably small. Example 2 which is the sodium sulfite-free Soybean protein material E has somewhat high viscosity though it is not problematic. In Comparative Example 1 (Soybean protein material F) in which the pH during the heating is low, a large amount of small aggregates are generated despite the low viscosity of the liquid food. This is unsuitable. In Comparative Example 1 in which the pH during the heating is high (Soybean protein material G) and Comparative Example 2 (Soybean protein material H) whose VTIS heat history is low, the viscosity is increased during storage though the aggregates are not problematic. This is unsuitable. As to Comparative Example 3 in which the solution viscosity of the soybean protein is lowered by the enzyme degradation, Soybean protein material J is unsuitable due to the high viscosity and the large amount of the large sized aggregates. Soybean protein material I is unsuitable due to the large amount of the large sized aggregates. Soybean protein material K of Comparative Example 4 has the high liquid food viscosity despite the addition of sodium hexametaphosphate, and the amount and size of aggregates and the amount of a precipitate after centrifugation are almost the same as those of Soybean protein material I. This is also unsuitable for a liquid food. In each of Examples 1 to 2, NSI in physical properties of the soybean protein material is high, the 12% solution viscosity and the mineral-added solution viscosity are low, and the emulsified particle diameter is small, thereby enabling us to prepare the good liquid food having low viscosity and less aggregation.

**Table 1 (Production Conditions, Physical Properties, and Enriched Liquid food Physical Properties of Soybean Protein Materials)**

| | | Example 1 | | | | Example 2 | Comparative Example 1 | | Comparative Example 2 | Comparative Example 3 | | Comparative Example 4 | Comparative Example 5 | |
|---|---|---|---|---|---|---|---|---|---|---|---|---|---|---|
| | soybean protein material | A | B | C | D | E | F | G | H | I | J | K | casein | |
| production conditions pH during heating | | | | | | | | | | | | | | |
| | | 6.0 | 6.3 | 6.7 | 7.4 | 6.3 | 5.5 | 7.6 | 7.0 | 6.3 | 7.0 | 7.0 | | |
| heating conditions | | 150 | ← | ← | ← | ← | ← | ← | 140 | 150 | ← | ← | | |
| | | 40 | ← | ← | ← | ← | ← | ← | 10 | 40 | ← | ← | | |
| enzyme treatment | | - | - | - | - | - | - | - | - | + | + | + | | |
| amount of additive (%) | Na sulfite | 0.08 | ← | ← | ← | 0 | 0.08 | ← | ← | ← | ← | ← | | |
| | Na | 0 | ← | ← | ← | ← | ← | ← | ← | ← | ← | 3 | | |
| | hexamethaphosphorate | | | | | | | | | | | | | |
| soybean protein material physical properties | | | | | | | | | | | | | | |
| NSI TCA S02 (ppm) 12% solution viscosity (mPa·s) | | 95 | 95 | 96 | 95 | 97 | 75 | 96 | 97 | 77 | 92 | 92 | | |
| | | 3.5 | 3.5 | 3.5 | 3.5 | 3.5 | 3.5 | 3.5 | 3.5 | 11.2 | 11.5 | 11.6 | | |
| | | 15 | 15 | 15 | 15 | N.D. | 15 | 15 | 15 | 15 | 15 | 15 | | |
| | | | | | | | | | | | | | | |
| | | 120 | 150 | 220 | 350 | 210 | 80 | 1,500 | 1,200 | 61 | 95 | 1,100 | | |
| | | | | | | | | | | | | | | |
| mineral-added solution | viscosity (mPa·s) amount of precipitate (%) | 5.5 | 6.5 | 6.5 | 7.5 | 7.5 | 8.5 | 8.5 | 8.5 | 6.5 | 50.0 | 47.5 | | |
| | | 0.5 | 0.5 | 0.5 | 0.5 | 0.5 | 2.0 | 0.5 | 0.5 | 3.5 | 1.0 | 0.3 | | |
| emulsified particle diameter (µm) | | 1.3 | 1.3 | 1.2 | 1.2 | 1.3 | 2.2 | 1.2 | 2.1 | 1.6 | 1.2 | 1.3 | | |
| enriched liquid food physical properties viscosity | immediately after | 18 | 22 | 35 | 58 | 78 | 32 | 88 | 133 | 100 | 430 | 380 | 15 | |
| (mPa·s) | preparation after 15 days at 40°C | | 25 | 35 | 55 | 78 | 55 | 35 | 155 | 210 | 170 | 550 | 535 | 18 |
| aggregate particle diameter (µm) amount of precipitate after centrifugation (g/50 g) aggregate evaluation | | | 50 | 50 | 50 | 50 | 50 | 50 | 50 | 50 | 250 | 250 | 250 | <30 |
| | | | 4.1 | 4.2 | 4.2 | 4.1 | 4.3 | 8.5 | 4.1 | 4.2 | 17.5 | 14.5 | 15.2 | 4.5 |
| | | | ○ | ○ | ○ | ○ | ○ | × | ○ | ○ | ×× | ×× | ×× | ○ |
| aggregate evaluation: | | ○ small and good | | | × many and inappropriate | | | | | xx large size and inappropriate | | | | |

## Claims

1. An enriched liquid food obtained by using a soybean protein material having the following physical properties a) to d):
a) an aqueous solution containing the soybean protein material in an amount of 5 g in terms of solid content relative to 100 g of the aqueous solution and also containing calcium lactate in an amount of 30 mg in terms of calcium content has a viscosity of 10 mPa·s or less at 20°C after the aqueous solution is heated at 121°C for 10 minutes, and produces precipitates in an amount of 1 vol% or less after the aqueous solution is centrifuged at 1,300 × g for 5 minutes;
b) a 12 wt% aqueous solution of the soybean protein material has a viscosity of 1,000 mPa·s or less at 5°C;
c) the soybean protein material can be solubilized in a 0.22 M TCA at a solubilization ratio of less than 11%; and
d) the soybean protein material has a PSI (protein solubility index) value of 70 or more.

2. The enriched liquid food according to claim 1,
wherein the soybean protein material is prepared by heating an aqueous solution or an aqueous dispersion of a soybean protein raw material at pH 5.7 to 7.4 and at a temperature of 110 to 160°C for 15 to 70 seconds.

3. The enriched liquid food according to claim 2,
wherein the soybean protein material is prepared by heating an aqueous solution or an aqueous dispersion of a soybean protein raw material in the presence of a sulfite in an amount of 0.05 wt% or more relative to solid content.

4. The enriched liquid food according to claim 1,
wherein the soybean protein material is contained in an amount of 50 wt% or more in terms of protein relative to total protein.
